# EUROPÄISCHE PATENTSCHRIFT

(11) **EP 0 585 837 B1**
(45) Veröffentlichungstag und Bekanntmachung des Hinweises auf die Patenterteilung: **05.03.1997**
(21) Anmeldenummer: 93113736.8
(22) Anmeldetag: 27.08.1993
(51) Int. Cl.: B29C 70/08, B29K 23/00, B29K 67/00

(54) **Verfahren zur Herstellung dickwandiger Formkörper**
Method for manufacturing thick-walled molded bodies
Procédé pour fabriquer des corps moulés à paroi épaisse

(30) Priorität: 04.09.1992 DE 4229616
(43) Veröffentlichungstag der Anmeldung: 09.03.1994
(73) Patentinhaber: BASF Aktiengesellschaft, 67063 Ludwigshafen (DE)
(72) Erfinder: Scholz, Dankmar, D-6710 Frankenthal (DE)

(56) Entgegenhaltungen:
- EP-A- 0 260 688
- EP-A- 0 402 708
- EP-A- 0 449 033
- DE-U- 9 103 282
- KUNSTSTOFFE Bd. 80, Nr. 9, September 1990, MUNCHEN DE Seiten 1003 - 1007 F. H RSCH 'Dreidimensionale Verst rkungsmaterialien f r Faserverbundwerkstoffe'*Seite 1005, linke Spalte, Absatz 3 - Seite 1006, linke Spalte, Absatz 4; Abbildung 8*
- KUNSTSTOFFE Bd. 79, Nr. 11, November 1989, MUNCHEN DE Seiten 1228 - 1230 W. B TTGER 'Dreidimensionale Faserverst rkungen f r Verbundwerkstoffe' *Seite 1229, linke Spalte, Absatz 3 - rechte Spalte, Absatz 2*

## Beschreibung

Die Erfindung betrifft die Verwendung von dickwandigen Formkörpern aus faserverstärkten ungesättigten Polyesterharzen mit Cyclopenten- oder Cyclohexengruppen (sogenannte HT-Harze) oder faserverstärkten Vinylesterharzen (sogenannte VE-Harze) für Wäscherköpfe in Anlagen zur Abgaswäsche.

HT-Harze können bekanntlich zur Herstellung von thermisch stabilen, hochwärmeformbeständigen Formkörpern eingesetzt werden, wenn man an die eigentliche Härtung bei niedrigen Temperaturen eine Nachhärtung bei erhöhter Temperatur anschließt. Derartige zweistufige Härtungsverfahren sind in EP-A 118 786 und EP-A 260 688 beschrieben.

Versucht man, auf dieser Basis dickwandige Formteile, z.B. mit einer Wanddicke oberhalb von 8 mm herzustellen, dann stellt man fest, daß im Dauerbetrieb bei hohen Temperaturen, z.B. von 200°C Delaminierung eintritt, d.h. es findet eine Aufspaltung des Formteils längs der Fasermatten statt, was zu einer drastischen Erniedrigung der Festigkeit und Steifigkeit des Formteils führt. Insbesondere bei der Anwendung als sogenannte Wäscherköpfe in Anlagen zur Abgaswäsche, die bei 180°C - 210°C betrieben werden, kann dies zu einem plötzlichen Kollaps der Anlage führen. Ähnliche Probleme ergeben sich beim Versuch, dickwandige Formteile aus VE-Harzen herzustellen.

Der Erfindung lag daher die Aufgabe zugrunde, für Wäscherköpfe in Anlagen zur Abgaswäsche dickwandige Formkörper mit hoher Temperaturbeständigkeit bereitzustellen, die auch bei längerem Betrieb bei erhöhten Temperaturen ihre Festigkeit und Steifigkeit behalten und keine Delaminierung zeigen.

Diese Aufgabe wird durch die Verwendung der erfindungsgemäßen dickwandigen Formteile gelöst.

Gegenstand der Erfindung ist die Verwendung von dickwandigen Formteilen aus gehärteten Laminaten für Wäscherköpfe in Anlagen zur Abgaswäsche, wobei die Laminate aus mehreren Lagen harzgetränkter Glasfasermatten bestehen, zwischen die mindestens ein Abstandsgewebe eingelegt ist, welches aus zwei Glasfasergewebelagen besteht, die durch Stegfäden miteinander verbunden sind und dadurch auf einen Abstand von 2,5 bis 15 mm gehalten werden, und wobei das Harz ein ungesättigtes Polyesterharz mit Cyclopenten- oder Cyclohexengruppen oder ein Vinylesterharz auf Basis Epoxy-Novolak und Methacrylsäure ist.

Die DE-U 9103282 beschreibt faserverstärkte Kunststoffhohlkörper, die ebenfalls aus Laminaten mit Abstandsgewebe bestehen. Die anspruchsgemäße Verwendung ist aber weder beschrieben noch angedeutet, ebensowenig sind die erfindungsgemäß einzusetzenden speziellen hochtemperaturbeständigen HT- bzw. VE-Harze genannt.

Als Ausgangsmaterial für die erfindungsgemäß verwendeten Laminate sind einerseits ungesättigte Polyesterharze mit Cyclopenten- oder Cyclohexengruppen (HT-Harze) und andererseits Vinylesterharze (VE-Harze) geeignet.

### A. HT-Harze

Es handelt sich hier um ungesättigte Polyester aus ethylenisch ungesättigten Dicarbonsäuren und Diolen. Als ethylenisch ungesättigte Dicarbonsäuren oder deren Anhydride kommen insbesondere Haleinsäure, Fumarsäure, Itaconsäure und Tetrahydrophthalsäure sowie deren Anhydride in Frage, wobei Maleinsäureanhydrid bevorzugt ist. Daneben können andere Carbonsäuren oder Anhydride, wie Adipinsäure, o-Phthalsäureanhydrid, Trimellithsäure oder Pyromellithsäure, mitverwendet werden. Geeignete Diole sind z.B. Propylenglykol-1,2, Ethylenglykol, Diethylenglykol, Butandiol-1,3, Butandiol-1,4, Neopentylglykol sowie hydriertes Bisphenol A. Daneben können Polyole, wie Trimethylolpropan, Glyzerin und Pentaerythrit mitverwendet werden.

Zum Einbau der Cyclopenten- bzw. Cyclohexen-Gruppierungen in die ungesättigten Polyester werden diese mit Dicyclopentadien bzw. dessen Derivaten oder Substitutionsprodukten modifiziert, vorzugsweise mit Dicyclopentadien oder Endomethylentetrahydrophthalsäure. Diese Umsetzungen sind bekannt. Wenn man von Diestern mit hoher Säurezahl oder freier Maleinsäure ausgeht und bei Temperaturen zwischen 120 und 140°C arbeitet, erhält man im wesentlichen eine Addition des Dicyclopentadiens an endständige Carboxyl- bzw. Hydroxylgruppen, wobei sich endständige Dicyclopentenylester- bzw. Dicyclopentenylethergruppen bilden. Setzt man Polyester mit niedriger Säurezahl ein und arbeitet bei höheren Temperaturen, vorzugsweise oberhalb von 170°C, so spaltet sich das Dicyclopentadien in zwei Moleküle Cyclopentadien, welches sich an Ethylendicarbonsäureester-Strukturen des Polyesters addiert und Endomethylentetrahydrophthalsäureester-Strukturen bildet. Diese Strukturen lassen sich auch durch den Einsatz von Endomethylentetrahydrophthalsäure oder deren Anhydrid erzeugen.

Bei einer bevorzugten Ausführungsform werden die modifizierten ungesättigten Polyester einem zusätzlichen Endgruppenverschluß mit N-Hydroxyalkyltetrahydrophthalimid bzw. N-Hydroxyalkylendimethylentetrahydrophthalimid unterworfen. Solche Umsetzungen sind z.B. in der deutschen Patentanmeldung P 32 30 924 beschrieben.

### B. VE-Harze

Kennzeichnend für diese Klasse von Harzen ist die Gruppe 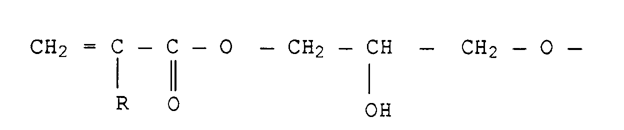 mit R = H oder CH₃.

Unter VE-Harzen, die auch Epoxidacrylate genannt werden, versteht man Umsetzungsprodukte von Polyepoxiden mit ungesättigten Monocarbonsäuren. Erfindungsgemäß werden Vinylesterharze aus Epoxy-Novolakharzen und Methacrylsäure eingesetzt, die beispielsweise in der US-PS 3 256 226 beschrieben sind. Sie weisen eine besonders hohe Wärmeformbeständigkeit auf.

Neben üblichen VE-Harzen sind auch carboxylmodifizierte Varianten vorteilhaft einsetzbar. Sie lassen sich leicht durch Umsetzung der Hydroxylgruppen von VE-Harzen mit Dicarbonsäureanhydriden, wie beispielsweise Maleinsäureanhydrid, o-Phthalsäureanhydrid oder Tetrahydrophthalsäureanhydrid, herstellen, wobei unter Ringöffnung Halbesterstrukturen entstehen.

Die HT- bzw. VE-Harzen werden in einer bevorzugten Ausführungsform in Vinylmonomeren gelöst, wobei üblicherweise 30 bis 100 Gew.-Teile Monomer auf 100 Gew.-Teile Polyester verwendet werden. Geeignete Vinylmonomere sind z.B. Styrol, Methylstyrol, Chlorstyrol oder Methylmethacrylat. Darüber hinaus können bevorzugt zusätzlich noch Monomere verwendet werden, die erst bei höheren Temperaturen polymerisieren, z.B. Diallylphthalat, trans-Endomethylentetrahydrophthalsäurediethylester oder Endomethylentetrahydrophthalsäuredihydroxyethylester.

Die HT- und VE-Harze können die üblichen Zusatzstoffe, wie Füllstoffe, Inhibitoren, Stabilisatoren, Farbstoffe, Pigmente, Eindickmittel und Beschleuniger bzw. Promotoren enthalten.

Die Herstellung der Laminate (nach DIN 18 820) erfolgt auf übliche Weise, indem auf eine geeignete Unterlage mehrere Lagen Glasfasermatten abgelegt werden, wobei die einzelnen Fasermatten mit Harz getränkt werden, bevor die nächste Fasermatte darauf abgelegt wird.

Beim Aufbau der Laminate werden zwischen die Glasfasermatten mindestens eine, vorzugsweise mindestens zwei Abstandsgewebe, eingelegt. Abstandsgewebe sind an sich bekannt. Sie werden z.B. von der Fa. Vorwerk hergestellt. Sie werden u.a. zur Herstellung von Sandwich-Bauteilen empfohlen, wobei auch eine Tränkung mit Polyesterharzen in Betracht kommt. Die Herstellung von dickwandigen, hochwärmeformbeständigen Formkörpern auf dieser Basis wurde bisher aber weder praktiziert noch beschrieben.

Die Abstandsgewebe bestehen aus zwei Glasfaser-Gewebelagen, die durch Stegfäden miteinander verbunden sind und dadurch auf einen Abstand von 2,5 bis 15 mm, vorzugsweise von 4 bis 10 mm, gehalten werden. Die Gewebe können wie Fasermatten mit Harz getränkt werden.

Nach der Tränkung stellt sich das Gewebe wieder auf die ursprüngliche Steghöhe zurück. Es erfolgt eine Tränkung der Stegfäden, die Zwischenräume bleiben aber sonst frei von Harz und bleiben auch nach der Härtung als Hohlräume im Formkörper erhalten.

Es wird also ein Laminat hergestellt, welches schichtförmig aufgebaut ist:
Auf eine kompakte, 3 bis 12 mm dicke Einzellaminatschicht aus harzgetränkten Fasermatten folgt eine flache Hohlräume enthaltende, 2,5 bis 15 mm dicke Abstandsschicht aus harzgetränktem Abstandsgewebe. Auf diese Weise lassen sich 8 bis 80 mm dicke oder auch noch dickere Laminate und Formkörper herstellen.

Die Härtung von HT-Harz-Laminaten erfolgt vorzugsweise in zwei Stufen, wie in EP-A 118 786 und insbesondere in EP-A 260 688 beschrieben ist.

In der ersten Stufe arbeitet man bei Temperaturen unterhalb von 100°C in Gegenwart von üblichen Kalthärtungssystemen, z.B. Ketonperoxid/Kobaltbeschleuniger oder Acylperoxid/Aminbeschleuniger. Bei dieser Härtung erfolgt die Copolymerisation der Vinylmonomeren mit den Ethylendicarbonester-Doppelbindungen des ungesättigten Polyesters. In manchen Fällen, insbesondere beim Härten von dünnen Schichten, kann es zweckmäßig sein, den vorgehärteten Formstoff einige Zeit auf Temperaturen um 100°C, vorzugsweise zwischen 80 und 120°C, zu erwärmen, um eine vollständige Polymerisation der Monomeren zu bewirken.

In der zweiten Stufe erfolgt die Nachhärtung bei Temperaturen oberhalb von 120°C, vorzugsweise zwischen 120 und 200°C, durch Zerfall des stabileren Radikalbildners, der in der ersten Stufe schon zugegen war, Jedoch noch nicht zersetzt wurde. Als Radikalbildner kommen z.B. tert.-Butylperbenzoat, Dicumylperoxid, Ditertiärbutylperoxid, C-C-labile Verbindungen und Perketale in Frage. Die Halbwertszeit dieser Radikalbildner bei 120°C ist vorzugsweise größer als 30 Minuten. Die Nachhärtung der verhältnismäßig dicken Laminate erfolgt langsam. Nachhärtezeiten von mehr als 2 Stunden, insbesondere von 10 bis 100 Stunden, sind bevorzugt.

VE-Harze werden im allgemeinen bei Raumtemperatur gehärtet, wobei Peroxid-Katalysatoren (z.B. Cyclohexanonperoxid, tert.-Butylperbenzoat oder Methylethylketonperoxid) zusammen mit Cobalt- und/oder Aminbeschleunigern zur Anwendung kommen. Die erhaltenen Formkörper können gegebenenfalls noch bei 100 bis 120°C nachgehärtet werden.

Die erfindungsgemäß verwendeten Formkörper weisen praktisch die gleiche Zugfestigkeit auf wie solche, die ohne Abstandsgewebe hergestellt wurden; sie zeigen jedoch eine verbesserte Biegefestigkeit und Biegesteifigkeit. Überraschend war vor allem, daß sie auch bei längerem Gebrauch bei Temperaturen um 200°C keine Delaminierung zeigen.

Die in den Beispielen genannten Teile und Prozente beziehen sich auf das Gewicht.

### Beispiel 1 (mit HT-Harz)

100 Teile eines mit Dicyclopentadien modifizierten ungesättigten Polyesterharzes (PALATAL A 460 der BASF), 3 Teile Methylethylketonperoxid, 0,3 Teile Cobaltnaphthenat (1 %ig) und 0,5 Teile Dicumylperoxid wurden vermischt. Die Gelierzeit dieses Harzes bei Raumtemperatur beträgt ca. 40 min.

Mit diesem Harzansatz wurden acht Lagen Glasfasermatten (Flächengewicht 450 g/m², pulvergebunden mit einem styrollöslichen Binder) im Handverfahren imprägniert. Auf dieses 6 mm dicke Laminat wurde eine Lage eines 5,8 mm dicken Abstandsgewebes der Fa. Vorwerk (Flächengewicht 720 g/m²) aufgelegt und ebenfalls getränkt. Wegen der Besonderheit des Abstandsgewebes wird keine vollständige Imprägnierung erhalten, so daß ein zusammenhängender Hohlraum in dem Abstandsgewebe erhalten bleibt. Darauf wird eine weitere Glasfasermatte gelegt und imprägniert. Das erhaltene Laminat wird durch halbstündiges Lagern bei Raumtemperatur angehärtet, danach werden drei derartige Laminate aufeinandergelegt und der gesamte, 38 mm dicke Aufbau 5 Std. bei Raumtemperatur gehärtet. Die Nachhärtung erfolgte durch 20stündige Lagerung bei 120°C und langsame Temperaturerhöhung während weiterer 40 Std. auf 200°C.

Das so hergestellte Laminat zeigt auch bei mehrmonatigem Betrieb bei 200 - 220°C keine Delaminierung.

### Beispiel 2 (mit VE-Harz)

Es wird wie in Beispiel 1 gearbeitet, wobei jedoch als Harz ein Umsetzungsprodukt von Bisphenol A-Diepoxid mit 2 Mol Methacrylsäure (PALATAL A 430-01) eingesetzt wurde. 100 Teile dieses Harzes wurden mit 1 Teil Cyclohexanonperoxid und 1 Teil Cobaltnaphthenat (1 %ige Lösung) vermischt. Die Gelierzeit beträgt 42 min. Die Nachhärtung erfolgte bei 110°C.

## Patentansprüche

1. Verwendung von dickwandigen Formteilen aus gehärteten Laminaten für Wäscherköpfe in Anlagen zur Abgaswäsche, wobei die Laminate aus mehreren Lagen harzgecränkter Glasfasermatten bestehen, zwischen die mindestens ein Abstandsgewebe eingelegt ist, welches aus zwei Glasfasergewebelagen besteht, die durch Stegfäden miteinander verbunden sind und dadurch auf einen Abstand von 2,5 bis 15 mm gehalten werden, dadurch gekennzeichnet, daß das Harz ein ungesättigtes Polyesterharz mit Cyclopenten- oder Cyclohexengruppen oder ein Vinylesterharz auf Basis Epoxy-Novolak und Methacrylsäure ist.

2. Verwendung nach Anspruch 1, dadurch gekennzeichnet, daß das Laminat mindestens zwei Abstandsgewebe eingelegt enthält.

3. Verwendung nach Anspruch 1, dadurch gekennzeichnet, daß die Dicke der kompakten Einzellaminate ohne Abstandsgewebe 3 bis 12 mm beträgt.

4. Verwendung nach Anspruch 1, dadurch gekennzeichnet, daß das Harz bei Temperaturen unterhalb von 100°C gehärtet und anschließend in einer zweiten Stufe oberhalb von 100°C nachgehärtet wird.

## Claims

1. The use of thick-walled moldings of cured laminates for flue gas scrubber heads in which the laminates consist of a plurality of layers of resin-impregnated glass fiber mats wherebetween there is placed at least one spacer fabric which consists of two glass fiber weave plies joined together a distance of from 2.5 to 15 mm apart by bridging threads, characterized in that the resin is an unsaturated polyester resin having cyclopentene or cyclohexene groups or a vinyl ester resin based on an epoxy-novolak and methacrylic acid.

2. A use as claimed in claim 1, characterized in that the laminate comprises at least two emplaced spacer fabrics.

3. A use as claimed in claim 1, characterized in that the thickness of the compact individual laminates without spacer fabric is from 3 to 12 mm.

4. A use as claimed in claim 1, characterized in that the resin is cured at below 100°C and then, in a second stage, aftercured at above 100°C.

## Revendications

1. Utilisation de pièces moulées à paroi épaisse, formées de stratifiés durois, pour des têtes de lavage dans des installations de lavage des gaz résiduaires, les stratifiés se composant de plusieurs épaisseurs de mats de fibres de verre imprégnés de résine, entre lesquelles est inclus un tissu d'écartement se composant de deux couches de tissu de fibres de verre qui sont reliées entra elles par des fils d'entretoisement et sont ainsi maintenues à une distance de 2,5 à 15 mm, caractérisée en ce que la résine est une résine de polyester insaturée comportant des groupements cyclopentène ou cyolohexène, ou une résine d'ester vinylique à base d'époxynovolaque et d'acide méthacrylique.

2. Utilisation selon la revendication 1, caractérisée en ce que le stratifié contient à l'état inclus au moins deux tissus d' écartement.

3. Utilisation selon la revendication 1, caractérisée en ce que l'épaisseur des stratifiés individuels compacts, sans tissu d'écartement, est comprise entre 3 et 12 mm.

4. Utilisation selon la revendication 1, caractérisée en ce que la résine est durcie à une température inférieure à 100°C, puis post-durcie, dans une seconde étape, à une température supérieure à 100°C.
